**Europäisches Patentamt**

(19) **European Patent Office**

**Office européen des brevets**

(11) Numéro de publication: **0 123 601**
**B1**

(12) **FASCICULE DE BREVET EUROPÉEN**

(45) Date de publication du fascicule du brevet:
**08.04.87**

(21) Numéro de dépôt: **84400708.8**

(22) Date de dépôt: **10.04.84**

(51) Int. Cl.⁴: **B 60 N  1/08,** F 16 C  29/04, F 16 C  29/10

(54) **Glissière à billes.**

(30) Priorité: **15.04.83  FR 8306233**

(43) Date de publication de la demande:
**31.10.84 Bulletin 84/44**

(45) Mention de la délivrance du brevet:
**08.04.87 Bulletin 87/15**

(84) Etats contractants désignés:
**BE DE GB IT LU NL SE**

(56) Documents cité:
**DE-C-826 552**
**FR-A-2 151 928**
**FR-A-2 310 239**
**FR-A-2 419 839**
**GB-A-2 071 486**
**US-A-2 195 349**

(73) Titulaire: **CYCLES PEUGEOT Société dite:,
Beaulieu, F-25700 Valentigney (FR)**

(72) Inventeur: **Forrey, François, 32 Rue du Petit
Chênois, F-25200 Montbeliard (FR)**

(74) Mandataire: **Polus, Camille, c/o Cabinet Lavoix 2,
Place d'Estienne d'Orves, F-75441 Paris Cedex 09
(FR)**

## Description

La présente invention concerne une glissière a billes et tout particulièrement l'élément interne d'une telle glissière.

Les glissières à billes comportent en général, actuellement, deux profilés, par exemple des profilés de section en U, emboîtés l'un dans l'autre, entre lesquels sont logées des billes permettant leur glissement relatif. Dans de nombreux cas toutefois, les profiles ne presentent pas une rigidité suffisante notamment lorsque le dispositif sur lequel ils sont montés risque d'être soumis à des efforts brutaux. Par ailleurs, la fixation des profilés sur l'organe mobile et l'organe fixe nécessite l'adjonction de pièces annexes, ce qui complique la réalisation de l'ensemble.

Le FR-A-2 151 928 décrit une glissière dont l'élément interne est constitué par un tube déformé partiellement logé dans un profilé de section en U. Le tube a une section en forme de huit et prend appui dans le profilé le long de plusieurs lignes parallèles, ce qui donne à l'ensemble une grande rigidité. Une telle glissière présente toutefois des inconvénients de frottement important et de risque d'usure rapide.

La présente invention a pour but de réaliser une glissière qui combine une rigidité importante et une grande faculté d'adaptation à des dispositifs divers avec une très bonne qualité de glissement.

Cette invention a pour objet une glissière du type ci-dessus, comportant un profilé extérieur de section en U muni de rebords et un élément interne constitué par un tube de section circulaire qui à été déformé, caractérisée en ce que l'élément interne est constitué par un tube déformé localement de façon à comporter une partie sensiblement plate, ayant sur sa face opposée à l'ouverture du profilé extérieur, un bossage central longitudinal entre deux portions concaves de réception de billes en appui sur le fond du profilé extérieur, et latéralement deux ailes latérales en saillie par rapport à la face opposée, reliant chacune de ces portions concaves à une autre portion concave qui reçoit des billes en appui contre le rebord du profilé extérieur.

La forme particulière de l'élément interne lui, permet de conserver la rigidité du tube qui est déformé, sans que son épaisseur de paroi soit modifiée tout en présentant des surfaces incurvées assurant un bon contact de glissement avec des billes.

Par ailleurs, la retenue de l'élément interne dans le profilé extérieur est due à la présence des ailettes qui font saillie par rapport au tube initial, mais sont absentes dans une portion de transition avec le tube de section circulaire non déformé. Une telle portion de transition qui peut donc traverser l'ouverture du profilé extérieur, résulte du processus même de déformation locale du tube et ne nécessite aucune opération supplémentaire de sorte que l'élément interne est immédiatement prêt à être fixé à l'extérieur du profilé à l'endroit approprié.

Dans un mode de réalisation, l'élément interne comporte un bossage central percé de crevés régulièrement espacés, constituant une crémaillère, de sorte qu'il peut coopérer avec un dispositif de verrouillage ou d'entrainement.

Une telle glissière est tout particulièrement adaptée à la réalisation d'un mécanisme de glissière de siège de véhicule automobile, l'un des éléments de la glissière étant fixé sur la carrosserie du véhicule tandis que l'autre est solidaire de l'armature du siège.

La description ci-dessous de modes de réalisation donnés à titre d'exemples non limitatifs, et représentés aux dessins annexés, fera d'ailleurs ressortir les avantages et caractéristiques de l'invention.

Sur ces dessins:

- la Fig. 1 est une vue en coupe verticale d'une glissière à billes comportant un élément selon l'invention
- la Fig. 2 est une vue analogue à la figure 1 d'une variante de réalisation;
- la Fig. 3 est une vue à plus grande échelle de l'élément de glissière de l'invention, montrant ses différentes phases de fabrication;
- la Fig. 4 est une vue en coupe du mécanisme de glissière au droit d'un dispositif de verrouillage;
- la Fig. 5 est une vue de dessous de la portion de glissière de la figure 4;
- la Fig. 6 est une vue suivant la ligne F-F de la figure 5;
- la Fig. 7 est une vue en perspective d'un mécanisme de glissière plus particulièrement destiné à un siège automobile;
- la Fig. 8 est une vue en perspective de l'élément interne de la glissière de la figure 7;
- les fig. 9 et 10 sont des vues partielles, en perspective éclatée, de deux variantes de réalisation d'une glissière selon l'invention.

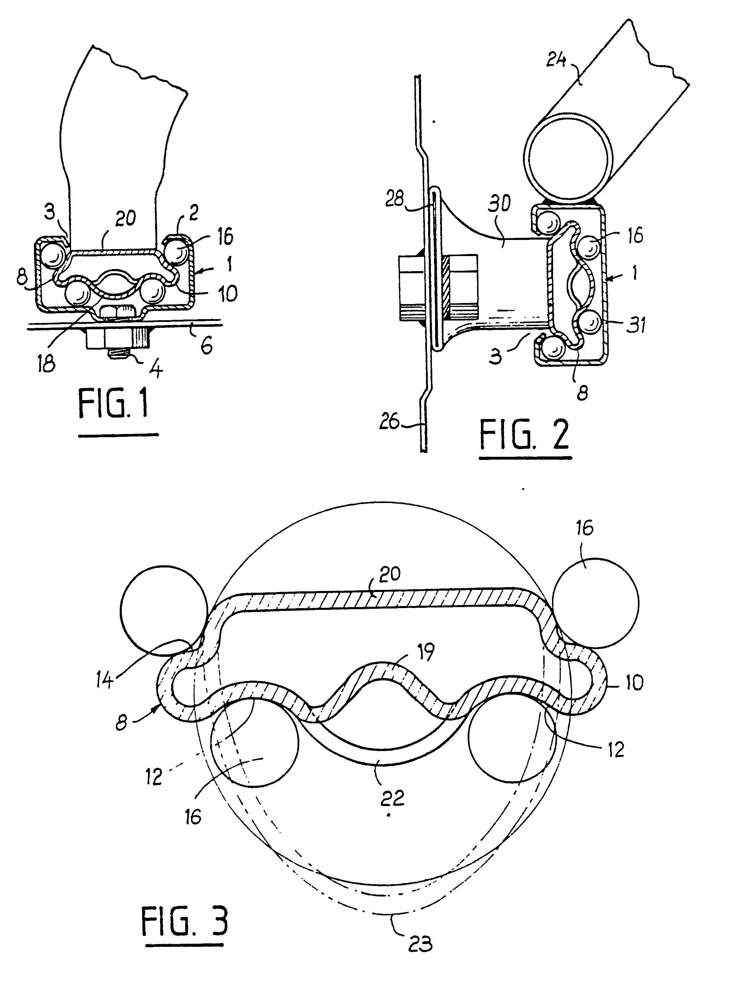

La glissière à billes représentée sur les dessins, et notamment sur la figure 1, comporte un élément extérieur 1 formé par un profilé de section en U muni de rebords internes 2 délimitant une ouverture 3. Ce profilé 1 est fixé, par exemple par des vis 4, sur un organe fixe 6. A l'intérieur de ce profilé 1 est monté un élément interne 8 qui est creux.

Comme le montrent plus particulièrement les figures 1 à 3, l'élément interne 8 est constitué par un tube déformé de façon à être sensiblement aplati et à comporter de chaque côté une ailette latérale en saillie, 10, entre deux portions concaves, respectivement 12 et 14, de réception des billes 16 de la glissière. Entre les deux portions concaves ou rainures 12, l'élément 8 forme un bossage central longidutinal, 18, tandis qu'entre les deux rainures 14 la face de ce même élément 10 est sensiblement plane.

De préférence, le bossage 18 comporte à intervalles réguliers des crevés 22 formé par enfoncement de la matière sans enlèvement de celle-ci, qui constituent pratiquement une crémaillère.

Cette section de l'élément tubulaire 8 est obtenue de préférence par déformation d'un tube dont la section circulaire est d'abord allongée pour prendre la forme indiquée en trait mixte sur la figure 3 et comporter la face plane 20. Au cours d'une seconde phase de déformation, la partie incurvée 23 de cette ébauche est rapprochée de la face plane 20 et déformée de façon à constituer les deux ailettes 10, de même que les rainures concaves 12 et 14 et le bossage 18. Un outil associé au poinçon assurant cette déformation perfore le bossage 18 et repousse le métal de ce bossage, comme indiqué en 19 sur la figure 3, pour former les crevés 22. Dans une telle déformation seule la paroi du tube a changé de forme, la matière qui constitue cette paroi n'ayant pas subi de modification, ni d'ailleurs l'épaisseur même de la paroi. Par suite, le tube conserve toute sa rigidité.

Comme l'élément interne 8 est maintenu dans le profilé 1 par la coopération de ses ailettes 10 avec les billes 16 et les rebords 2, l'ensemble de la glissière présente une grande résistance et une bonne tenue mécanique.

Dans le mode de réalisation représenté sur la figure 1, le profilé en U 1 est fixé sur un organe fixe tandis que l'élément interne 8 est mobile, mais il est bien évident que la glissière pourrait être montée en sens inverse, comme le montre par exemple la figure 2, l'élément mobile 8 étant fixé sur un organe fixe 26, par exemple une portion de carrosserie, tandis que le profilé en U 1 est rendu solidaire d'un organe mobile 24.

Quel que soit le mode de réalisation, la partie déformée du tube qui constitue l'élément mobile 8 est, de préférence, la partie centrale d'un tube qui se prolonge à chacune des extrémités de cette partie déformée et est terminée par des pattes 28 de fixation, par exemple sur l'orange 26. Le tube est alors, somme le montre la figure 2, recourbé à chacune des extrémités de la partie centrale déformée 8 pour constituer deux bras 30 en saillie, portant chacun à son extrémité la patte 28 de fixation. ·

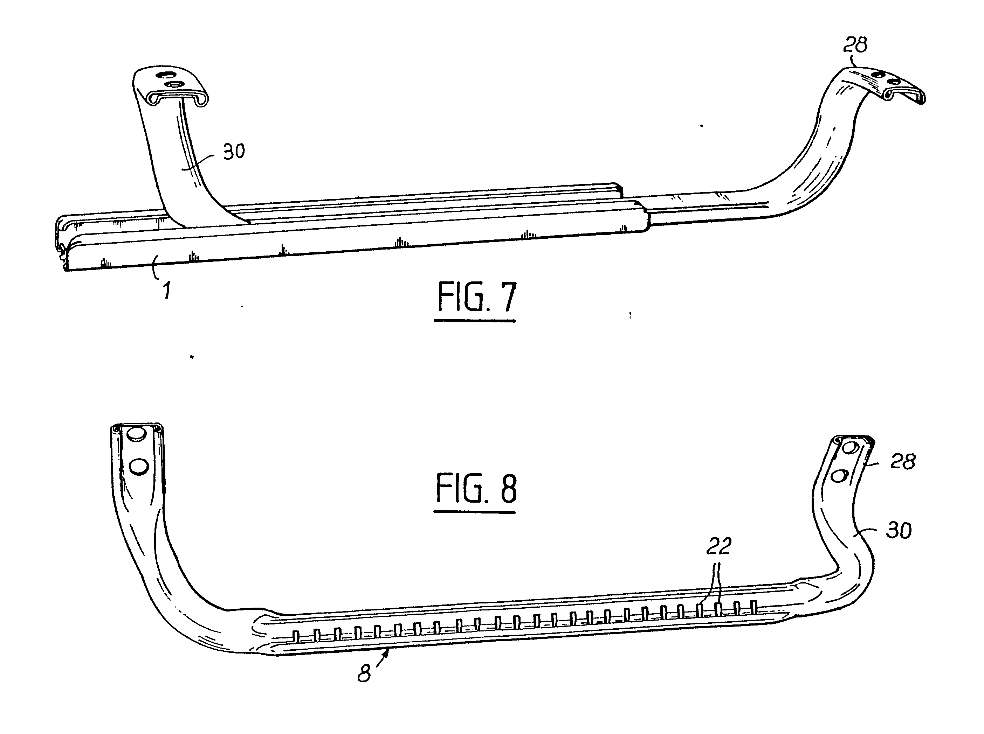

Chaque bras 30 a une section sensiblement circulaire et est relié à l'élément interne 8 de la glissière par une portion de transition ayant une section droite simplement allongée ou ovalisée, par exemple comme montré en trait mixte à la partie inférieure de la figure 3, ce qui lui permet de traverser l'ouverture 3 du profilé 1. Les bras 30 peuvent ainsi facilement se déplacer le long de cette ouverture 3, comme le montre la figure 7. Cette disposition permet de réduire la longueur du profilé 1 et/ou de l'élément mobile 8, tout en conservant un débattement important des deux organes de la glissière.

Dans le cas d'un siège de véhicule automobile, l'élément 8 et ses bras 30 sont de préférence solidaires de l'armature de l'assise du siège, tandis que le profilé 1 est fixé sur le plancher du véhicule, ce qui permet à l'élément mobile 8 de faire pratiquement partie de l'armature du siège et de donner à celui-ci un support robuste et relativement peu encombrant, tout en lui permettant une mobilité appropriée.

Bien entendu, l'entraînement de l'organe mobile, que ce soit le profilé 1 ou l'élément interne 8, peut être effectué manuellement mais il est, de préférence, obtenu par l'intermédiaire de la crémaillère formée par les crevés 22 de l'élément 8. Le profilé 1 est, dans ce cas, percé dans sa base 31, d'une ouverture correspondant à un ou de préférence deux crevés 22, qui permet l'engrènement de chaque crevé avec un pignon d'entraînement ou tout autre dispositif analogue.

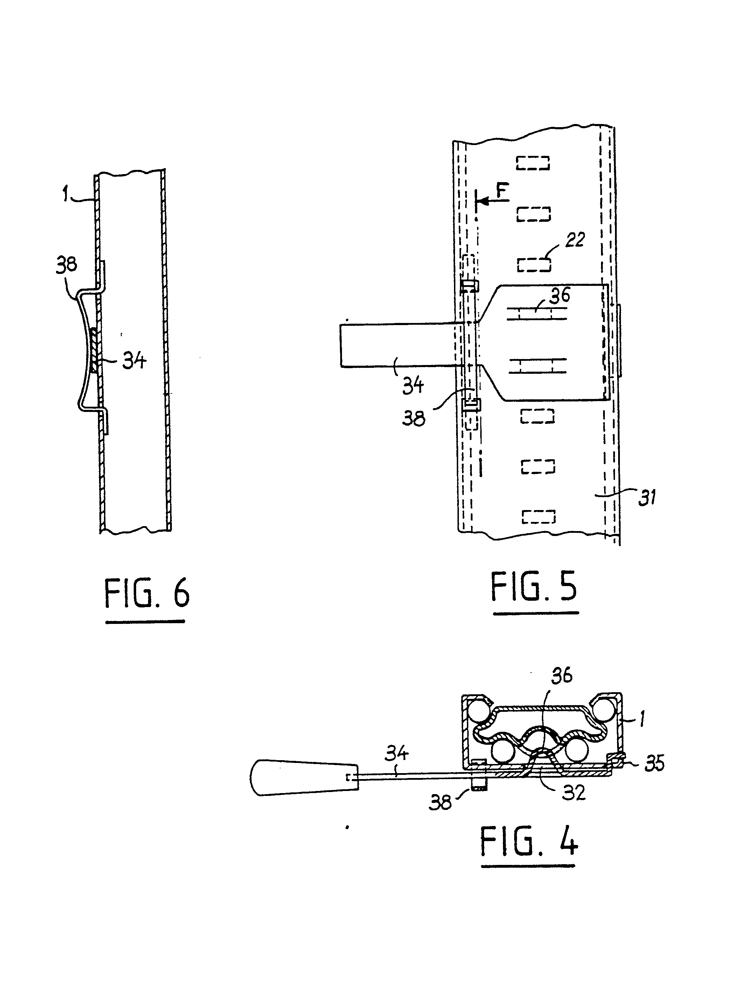

Selon un autre mode de réalisation, la glissière est simplement verrouillée dans la position choisie par un dispositif de verrouillage traversant l'ouverture 32 du fond du profilé 1 et coopérant avec les crevés 22. Les figures 4 à 6 montrent un tel dispositif de verrouillage qui comporte un levier 34 articulé à la partie inférieure du profilé 1 dans une encoche 35 du fond de ce profilé. Le levier 34 est muni d'un, ou de préférence deux, bossage 36 qui traverse l'ouverture 32 et s'emboîte dans le crevé 22 en regard de cette ouverture. Un ressort 38, en forme d'étrier, est fixé sous le fond 31 du profilé 1 et tend à serrer le levier 34 contre ce fond dans la position de verrouillage des crevés 22 et, par suite, de l'élément 8.

Un effort sur le levier 34 suffit à écarter les bossages 32 des crevés 22 contre l'action du ressort 38 et libère ainsi l'élément interne 8 qui peut se déplacer par·rapport au profilé 1. Dès que le levier 34 est relaché, le ressort 38 le rappelle contre le profilé 1 ce qui verrouille immédiatement la glissière.

Bien entendu, le même dispositif peut être utilisé, que le profilé soit fixe ou mobile, qu'il soit horizontal ou vertical.

La glissière ainsi réalisée peut être utilisée pour toutes sortes d'applications. Bien que sur les figures 7 et 8 les deux éléments 1 et 8 aient des portions coopérantes rectilignes et que la trajectoire de la glissière soit également rectiligne, il est clair que ces éléments peuvent également être incurvés.

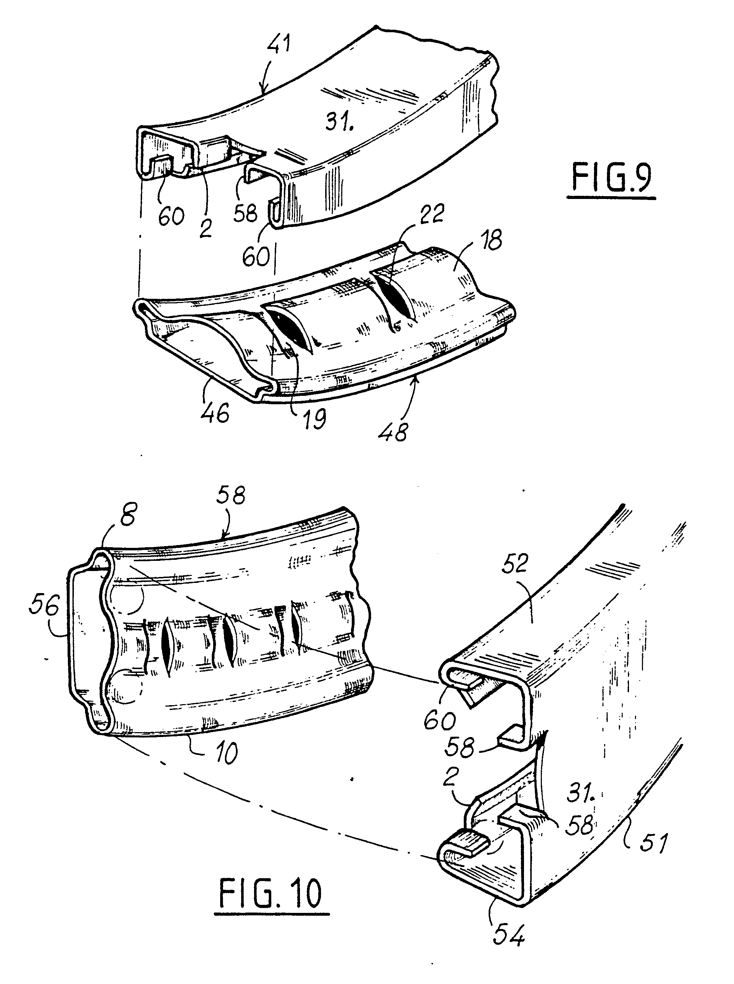

Par exemple, comme le montre la figure 9, le profilé 1 peut être incurvé autour d'un axe transversal à son fond 31 qui prend alors la forme d'une portion de cylindre. L'élément interne 48 est incurvé de manière correspondante, sa face plane 20 devenant une portion de cylindre 46. Une telle courbure ne modifie pratiquement pas la forme des sections droites de ces éléments, de sorte que la glissière fonctionne de la même manière que la glissière rectiligne.

C'est également le cas de la glissière 51-58 de la figure 10, dont les deux éléments sont incurvés autour d'un axe perpendiculaire au fond 31 du profilé 51 et à la face plane 56 de l'élément interne 58. Les deux côtés 52, 54 du U du profilé 51 forment alors deux portions de cylindre tandis que les ailettes 8, 10 de l'élément interne constituent deux portions d'anneau.

Quelle que soit la forme de la glissière et de la trajectoire de coulissement, chaque extrémité du profilé en U, 1, 41 ou 51, est munie de pattes recourbées de maintien des billes, interdisant leur fuite à l'extérieur de la glissière, notamment lors du déplacement de l'élément interne. De préférence, ces pattes sont découpées dans la matière du profilé lui-même. Par exemple, deux pattes 58 sont découpées en sens inverse dans le fond 31 et rabattues vers l'intérieur, en direction des rebords 2, de façon à retenir les deux rangées de billes 16 roulant sur le fond 31.

Deux autres pattes 60 sont découpées dans la partie extrême des rebords 2 et également repliées en direction du fond 31, de façon à maintenir les billes 16 en contact avec le rebord 2. Le déplacement des bras 30, ou d'autres éléments d'extrémité, dans la fente 3 ne risque donc jamais de faire sortir les billes et la glissière peut être utilisée avec sécurité.

## Revendications

1. Glissière comportant un profilé extérieur (1) de section en U muni de rebords et un élément interne (8) constitué par un tube de section circulaire qui a été déformé, caractérisée en ce que l'élément interne (8) est constitué par un tube déformé localement de façon à comporter une partie sensiblement plate ayant, sur sa face opposée à l'ouverture (3) du profilé extérieur (1), un bossage central longitudinal (18) entre deux portions concaves (12) de réception de billes (16) en appui sur le fond du profilé exterieur et, latéralement, deux ailes en saillie (8, 10) par rapport à la face opposée reliant chacune de ces portions concaves (12) à une autre portion concave (14) qui reçoit des billes (16) en appui contre le rebord (2) du profilé extérieur (1).

2. Glissière suivant la revendication 1, caractérisée en ce que l'élément interne (8) comporte une face plane (20) en regard de l'ouverture (3) du profilé extérieur en U.

3. Glissière suivant l'une des revendications 1 et 2, caractérisée en ce que l'élément interne (8) est formé à partir d'un tube circulaire par deux déformations successives, sans enlèvement de matière.

4. Glissière suivant l'une des revendications 1 à 3, caractérisée en ce que l'élément interne (8) comporte en outre des crevés (22) régulièrement espacés, formant une crémaillère le long du bossage (18).

5. Glissière suivant l'une des revendications précédentes, caractérisée en ce que l'élément interne (8) est prolongé a chaque extrémité de sa partie déformée par des bras coudés (30) de section circulaire qui sont munis de pattes (28) de fixation.

6. Glissière suivant l'une des revendications 1 à 5, caractérisée en ce que les bras (30) de section circulaire sont reliés à la partie déformée de l'élément interne par une portion dont la section a une forme intermédiaire et qui est susceptible de traverser l'ouverture (3) du profilé, de sorte que les bras peuvent être déplacés le long de l'ouverture.

7. Glissière suivant la revendication 6 caractériseée en ce que le profilé en U comporte, en regard des crevés (22) de l'élément interne (8), une ouverture (32) de passage d'un organe d'entraînement ou d'un dispositif de verrouillage coopérant avec la crémaillère formée par les crevés.

8. Glissière suivant la revendication 7, caractérisée en ce qu'il comporte un levier de verrouillage (34) muni d'un bossage (36) et pivotant sur le fond du profilé (1), de sorte que le bossage (36) traverse l'ouverture (32) de ce fond et pénètre dans l'un des crevés (22).

9. Glissière suivant l'une des revendication 6 à 8, caractérisée en ce que les éléments interne (48, 58) et externe (41, 51) sont incurvés, l'élément mobile se déplaçant sur une trajectoire en forme de portion de cercle.

## Patentansprüche

1. Langsführung mit einem mit Randflanschen versehenen, im Querschnitt U-förmigen äußeren Profilteil (1) und einem Innenteil (8), das durch ein verformtes Roht mit ursprünglich kreisförmigem Querschnitt gebildet wird, dadurch gekennzeichnet, daß das Innenteil (8) durch ein Roht gebildet wird, das örtlich derart verformt ist, daß es einen im wesentlichen flachen Abschnitt aufweist, der auf seiner der Öffnung (3) des äußeren Profilteils (1) gegenüberliegenden Oberfläche einen längs verlaufenden Mittelwulst (18) zwischen zwei konkaven Bereichen (12) zur Aufnahme von am Grund des äußeren Profilteils abgestützten Kugeln (16) und seitlich zwei in Bezug auf die gegenüberliegende Oberfläche vorspringende Flügel (8, 10) besitzt, die jeden der konkaven Bereiche (10) mit einem anderen konkaven Bereich (14) verbinden, der an dem Randflansch (2) des äußeren Profilteils (1) abgestützte Kugeln (16) aufnimmt.

2. Längsführung nach Anspruch 1, dadurch gekennzeichnet, daß das Innenteil (8) eine der Öffnung (3) des U-förmigen äußeren Profilteils zugewandte ebene Oberfläche (20) aufweist.

3. Längsführung nach Anspruch 1 und 2, dadurch gekennzeichnet, daß das Innenteil (8) ohne Entfernen von Material in zwei aufeinanderfolgenden Verformungsschritten aus einem kreisförmigen Rohr geformt ist.

4. Längsführung nach einem der Ansprüche 1 bis 3, dadurch gekennzeichnet, daß das Innenteil (8) außerdem in regelmäßigen Abständen angeordnete Schlitze (22) aufweist, die eine längs des Mittelwulstes (18) verlaufende Zahnleiste bilden.

5. Längsführung nach einem der vorstehenden Ansprüche, dadurch gekennzeichnet, daß das Innenteil (8) an jedem Ende seines verformten Abschnittes durch gebogene, mit Befestigungslaschen (28) versehene Arme (30) mit kreisförmigem Querschnitt vorlängert ist.

6. Längsführung nach einem der Ansprüche 1 bis 5, dadurch gekennzeichnet, daß die Arme (30) mit kreisförmigem Querschnitt mit dem verformten Abschnitt des Innenteils durch einen Abschnitt verbunden sind, dessen Querschnitt eine Zwischenform aufweist und der in der Lage ist, die Öffnung (3) des Profilteils zu durchlaufen, so daß die Arme längs der Öffnung verstellbar sind.

7. Längsführung nach Anspruch 6, dadurch gekennzeichnet, daß das U-förmige Profilteil mit einer den Schlitzen (22) des Innenteils (8) zugewandten Öffnung (32) für ein Antriebsorgan oder eine Verriegelungseinrichtung versehen ist, das bzw. die mit der durch die Schlitze gebildeten Zahnleiste zusammenwirkt.

8. Längsführung nach Anspruch 7, gekennzeichnet durch einen mit einer Erhebung (36) versehenen Verriegelungshebel (34), der derart auf den Boden des Profilteils (1) schwenkbar ist, daß sich seine Erhebung (36) durch die Öffnung (32) dieses Bodens erstreckt und in einen der Schlitze (22) eingreift.

9. Längsführung nach einem der Ansprüche 6 bis 8, dadurch gekennzeichnet, daß die Innen- und Außenteile (48, 58; 41, 51) gekrümmt sind, so daß die Bewegungsbahn des beweglichen Teils einen Abschnitt eines Kreisbogens bildet.

## Claims

1. A slide structure comprising an outer section element (1) having a U-section and provided with flanges and an inner element (8) constituted by a tube of circular section which has been deformed, characterised in that the inner element (8) is constituted by a tube locally deformed in such manner as to comprise a substantially flat portion which has, on the side thereof opposed to the opening (3) of the outer section member (1), a longitudinal central boss (18) between two concave portions (12) receiving balls (16) bearing against the bottom of the outer section element and, laterally, two wings (8, 10) projecting from the opposed side connecting each of these concave portions (12) to another concave portion (14) which receives balls (16) bearing against the flange (2) of the outer section element (1).

2. A slide structure according to claim 1, characterised in that the inner element (8) comprises a planar side (20) in facing relation to the opening (3) of the outer U-section element.

3. A slide structure according to one of the claims 1 and 2, characterised in that the inner element (8) is formed from a circular tube by two successive deformations without removal of material.

4. A slide structure according to one of the claims 1 to 3, characterised in that the inner element (8) further comprises evenly spaced apart sheared and deformed portions (22) forming a rack along the boss (18).

5. A slide structure according to one of the preceding claims, characterised in that the inner element (8) is extended at each end of its deformed part by bent arms (30) of circular section which are provided with fixing tabs (28).

6. A slide structure according to one of the claims 1 to 5, characterised in that the arms (30) of circular section are connected to the deformed part of the inner element by a portion whose section has an intermediate shape and which is capable of extending through the opening (3) of the section element so that the arms may be displaced along the opening.

7. A slide structure according to claim 6, characterised in that the U-section element comprises, in facing relation to the sheared and deformed portions (22) of the inner element (8), an opening (32) for the passage of a driving element or a locking device cooperating with the rack formed by the sheared and deformed portions.

8. A slide structure according to claim 7, characterised in that it comprises a locking lever (34) provided with a boss (36) and pivoting on the bottom of the section element (1) so that the boss (36) extends through the opening (32) of this bottom and enters one of the sheared and deformed portions (22).

9. A slide structure according to one of the claims 6 to 8, characterised in that the inner elements (48, 58) and outer elements (41, 51) are curved, the movable element moving in a path in the shape of a portion of a circle.

**FIG. 1**

**FIG. 2**

**FIG. 3**

FIG. 6

FIG. 5

FIG. 4

FIG. 7

FIG. 8

0 123 601

FIG.9

FIG. 10